# EUROPÄISCHE PATENTANMELDUNG

(11) **EP 1 583 373 A2**
(43) Veröffentlichungstag der Anmeldung: **05.10.2005**
(21) Anmeldenummer: 05101574.1
(22) Anmeldetag: 01.03.2005
(51) Int. Cl.: H04Q 3/00, H04L 12/28

(54) **Netzressourcengesteuerte Dienst-Bereitstellung**

(30) Priorität: 29.03.2004 DE 102004015267
(71) Anmelder: SIEMENS AKTIENGESELLSCHAFT, 80333 München (DE)
(72) Erfinder: Kain, Albert, A-1160 Wien (AT); Miyagawa, Sumio, A-1020 Wien (AT)

(57) **Zusammenfassung**

Die Erfindung beschreibt ein Verfahren und eine Vorrichtung zum Bereitstellen von Netzressourcen (QoS) für den Versand von Daten mindestens eines Dienstes von einem Dienste-Server (AS) an ein Kommunikationsendgerät (MS) über ein Kommunikationsnetz. Erfindungsgemäß wird von einer Ressourcen-Entscheidungsfunktion (PDF) eine Entscheidung, betreffend die Bereitstellung von Netzressourcen (QoS) in mindestens einem Netzelement (SGSN/GGSN), für den Versand von Daten mindestens eines Dienstes vom Dienste-Server (AS) an das Kommunikationsendgerät (MS) getroffen. Danach wird die getroffene Entscheidung als Nachricht an eine erste Netzeinheit (GGSN) und an eine weitere Netzeinheit (SCF) gesendet. Die erste Netzeinheit (GGSN) stellt daraufhin bei einer positiv getroffenen Entscheidung Netzressourcen für den Versand der Daten mindestens eines Dienstes an das Kommunikationsendgerät bereit.

## Beschreibung

Die Erfindung betrifft ein Verfahren und eine Vorrichtung zum Bereitstellen von Netzressourcen (QoS) für den Versand von Daten mindestens eines Dienstes von einem Dienste-Server (AS) an ein Kommunikationsendgerät (MS) über ein Kommunikationsnetz.

In einem sogenannten intelligenten Netz (IN oder ISDN, Integrated Services Digital Network), werden zusätzlich zu dem Grunddienst des Telekommunikationsnetzes den Teilnehmern des Netzes Zusatzdienste angeboten, wie z.B. ein Nummerumwertedienst zum Einrichten von Kurznummern oder ein Dienst der Anruferkontrolle (control of user), durch den der Teilnehmer nur für ausgewählte Anrufer erreichbar ist. Für die Durchführung dieser Dienste ist, wie bekannt, in dem intelligenten Netz eine Dienststeuerstation vorgesehen, die im Allgemeinen von den Vermittlungseinrichtungen des intelligenten Netzes verschieden ist.

In Kommunikationsnetzen, insbesondere zellularen Mobilfunknetzen, sind an die Vermittlungseinrichtungen (MSC) jeweils Basisstationen angeschlossen, mit deren Hilfe über eine Luftschnittstelle Kommunikationsendgeräte anschließbar sind. Diese Endgeräte ermöglichen einem Nutzer eines Mobilnetzes den Netzzugang. Die Vermittlungseinrichtungen sind darüber hinaus auch für den Übergang zu weiteren Netzen, z.B. einem Datenübertragungsnetz oder einem Festnetz, eingerichtet. Für die Kommunikation zwischen den Vermittlungseinheiten werden zur Zeit verschiedene Protokolle eingesetzt, so etwa INAP-Protokolle (Intelligent Network Application Part) des Europäischen Normeninstituts für Telekommunikation (ETSI) oder das MAP-Protokoll (Mobile Application Part) des GSM-Standards. Diese Protokolle werden üblicherweise netzintern verwendet. Weiterhin ist aus den ETSI-Spezifikationen GSM 03.78 und GSM 09.02, eine sogenannte CAMEL Plattform (Customized Application for Mobile Network Enhanced Logic) bekannt, mit der die Unterstützung von zusätzlichen anbieterspezifischen Diensten für Teilnehmer ermöglicht werden soll. Der CAMEL-Standard legt hierfür ein CAP-Protokoll (CAMEL Application Part) fest, innerhalb dessen Signalisierungsmeldungen zwischen dem Heimatregister (HLR) und einer Dienststeuerstation (Dienste-Server bzw. Application Function) austauschbar sind. CAMEL und das Versenden von Daten eines Dienstes mittels GPRS (General Packet Radio Service), wird näher im Standard 3GPP TS 23.078 betrachtet.

In 3GPP TR 23.917 wird die Erweiterung eines zellularen Mobilfunknetzes mit der Policy Decision Function (PDF) (Ressourcen Entscheidungsfunktion) und ihren Funktionen vorgestellt. Die Ressourcen Entscheidungsfunktion ist eine Netzeinheit eines IP-Multimedia-Subsystem (IMS) (IP-Multimedia-Untersystem), welche die Bereitstellung von Netzressourcen erlaubt bzw. verweigert, wenn ein Dienste-Server (Applikation function), der einen Dienst für einen Nutzer eines Kommunikationsendgerätes anbietet, anfragt. Die Policy Decision Function (PDF) dient also zur Anpassung der Qualität des Dienstes (Quality of Service = QoS) und ist über die Gq-Schnittstelle mit dem Kernnetz verbunden. Auf Grundlage der Entscheidung der Ressourcen Entscheidungsfunktion stellt das Zugangsnetz des Kommunikationsnetzes bei GPRS (General Packet Radio Service) normalerweise der SGSN (Serving GPRS Support Node) und der GGSN (Gateway GPRS Support Node), die Netzressourcen bereit.

Im 3GPP-Standard 3GPP TS 23.060 wird die Verwendung von GPRS (General Packet Radio Service) spezifiziert. Die Paket-Domäne nützt Paket-Modus-Techniken um Daten und Signalisierungen effizient zu übertragen. Die Paket-Domäne optimiert die Nutzung der Netz- und Funkressourcen und wird genutzt sowohl von Funk-Zugangsnetzen (Radio Access Networks RAN) der zweiten Generation, als auch von Funk-Zugangsnetzen der dritten Generation, dem GERAN (GSM EDGE Radio Access Network) und dem UTRAN (UMTS Terrestrial Radio Access Network). Das Kernnetz (Core Network) eines Kommunikationsnetzes unterstützt zusammen mit den Funk-Zugangsnetzen GPRS-Dienste und ist ausgelegt zur Unterstützung verschiedener Dienst-Qualitäts-Level (Quality of Service Levels). Damit wird eine effiziente Übertragung von Echtzeit- (Sprache, Video etc.) und Nicht-Echtzeit-Daten eines Dienstes ermöglicht. Applikationen, die Standard-Daten-Protokolle und SMS verwenden, werden genauso unterstützt, wie das Zusammenarbeiten mit einem IP-Netz. Die Vergebührung von Diensten kann flexibel erfolgen und erlaubt eine Rechnungsstellung gemäß der Menge der übertragenen Daten, der unterstützten Dienst-Qualität (QoS) und der Dauer der Verbindung. Der SGSN (Serving GPRS Support Knoten) beobachtet den Ort eines Kommunikationsendgerätes und führt Sicherheitsfunktionen und die Zugangskontrolle aus. Der SGSN ist mit dem GERAN Basis-Stations-System (base station system) über die Gb oder die Iu-Schnittstelle und/oder beim UTRAN über die Iu-Schnittstelle verbunden. Der SGSN ist auch über eine GPRS-Dienste-Vermittlungsfunktion (GPRS Service Switching Function = gprsSSF) mit einer GSM-Dienste-Kontroll-Funktion (GSM Service Control Function = gsmSCF) für die optimale Nutzung von CAMEL und zur Unterstützung von Kosten-Kontroll-Dienste verbunden. Der GGSN (Gateway GPRS Support Node) unterstützt das Zusammenarbeiten mit einem Paket-Daten-Netz und ist mit dem SGSN über einen GTP-Tunnel (GPRS Tunnelling Protocol - Tunnel) verbunden. Der GGSN ist mit einem IP-basierten Paketnetz (IP based packet domain PLMN (Public Land Mobile Network) backbone network) verbunden.

Die Aufgabe der Erfindung ist darin zu sehen, dass eine effiziente und kosteneffektive Möglichkeit zur Bereitstellung von Netzressourcen beim Versand von Daten eines Dienstes vorgeschlagen wird.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung besteht darin, dass eine Entscheidung, die von einer Ressourcen-Entscheidungsfunktion bezüglich der Erlaubnis bzw. der Verweigerung der Bereitstellung von Netzressourcen in mindestens einem Netzelement für den Versand eines Dienstes von einem Dienste-Server an ein Kommunikationsendgerät getroffen wurde, sowohl an eine erste Netzeinheit (GGSN), als auch an eine weitere Netzeinheit (gsmSCF) gesendet wird. Die Entscheidung kann in einer Nachricht an eine erste Netzeinheit (GGSN) und an eine weitere Netzeinheit (gsmSCF) gesendet werden. Dabei gibt es die Möglichkeit, dass die Entscheidung in einer CAP-Initialisierungsnachricht (CAP Initial DP GPRS) über einen Serving-GPRS-Support-Node (SGSN) an die weitere Netzeinheit (gsmSCF=SCF) versendet wird oder, dass die Entscheidung direkt von der ersten Netzeinheit (GGSN) an die weitere Netzeinheit (Dienst-Kontroll-Funktion) weitergeleitet wird. Ein großer Vorteil dieser Erfindung ist, dass die Funktionen der Ressourcen-Entscheidungsfunktion für Dienste, insbesondere CAMEL-Dienste, genutzt werden können. Damit kann die Verteilung von Netzressourcen zum Beispiel die Qualität des Dienstes (QoS), die Übertragungsbandbreite etc. effizienter und kosteneffektiver für den Versand von Daten eines Dienstes geschehen.

Die Erfindung wird anhand eines in einer Figur dargestellten Ausführungsbeispiels näher erläutert. Dabei zeigen
- Figur 1: eine erste Möglichkeit für den Versand einer Entscheidung an die Ressourcen-Entscheidungsfunktion,
- Figur 2: eine zweite Möglichkeit für den Versand einer Entscheidung an die Ressourcen-Entscheidungsfunktion,
- Figur 3: eine vereinfachte Darstellung einer erfindungsgemäßen Vorrichtung.

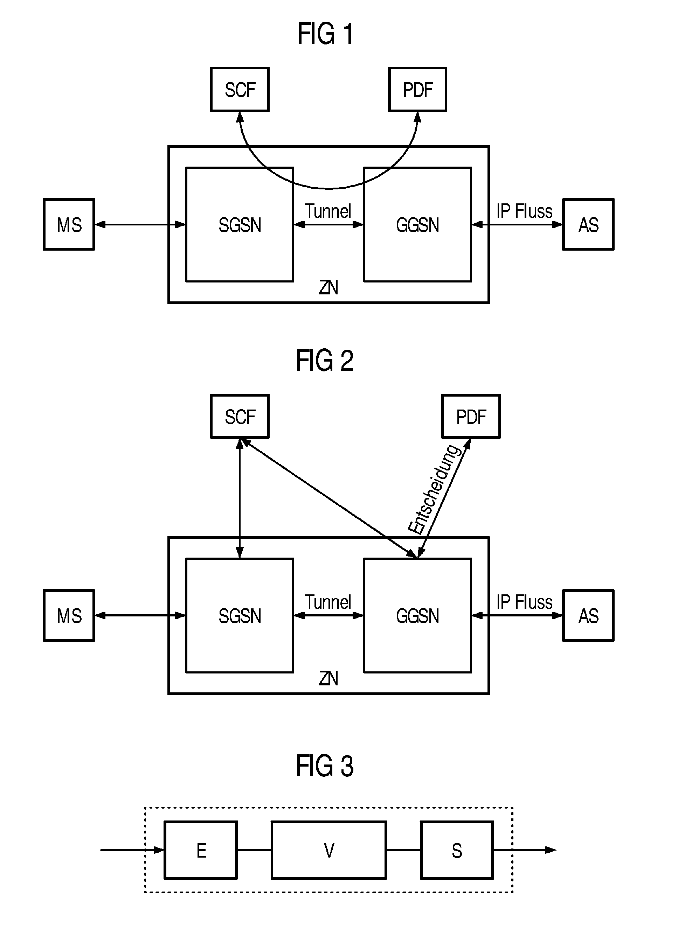

Figur 1 zeigt eine vereinfachte Darstellung eines Kommunikationsnetzes, insbesondere eines zellularen Mobilfunknetzes, mit einem Kommunikationsendgerät MS, das Daten mindestens eines Dienstes von einem Dienste-Server AS über ein Zugangsnetz ZN erhält. Ein Kommunikationsendgerät MS kann ein Mobilfunkendgerät, ein mobiler Computer, ein Computer, ein mobiler Organizer oder Ähnliches sein. Das Zugangsnetz ZN besteht im Allgemeinen u. a. aus einem Serving-GPRS-Support-Node SGSN, der mit einem Gateway-GPRS-Support-Node GGSN über einen GPRS-Tunnel bzw. einem GTP-Tunnel verbunden ist. Der Serving-GPRS-Support-Node SGSN ist mit einer Dienst-Kontroll-Funktion SCF verbunden. Die Dienst-Kontroll-Funktion SCF wird allgemein auch CAMEL-Dienst-Umgebung (CAMEL-Service-Enviroment = CSE) genannt. Eine Ressourcen-Entscheidungsfunktion PDF in einem IP-Multimedia-Untersystem ist mit dem Gateway-GPRS-Support-Node GGSN im Zugangsnetz ZN verbunden.

Wenn ein CAMEL-Dienst-Nutzer mit seinem Kommunikationsendgerät MS auf Antrag einen GPRS PDP Kontext erstellt, wird die Information zur Dienst-Kontroll-Funktion SCF gesandt. In der Information ist ein Dienst-Qualitätsparameter (QoS-Parameter), der hauptsächlich für die Vergebührung benutzt wird, enthalten. Der Dienst-Qualitätsparameter ist nur ein generischer Parameter, der gegenwärtig zur Festlegung der Vergebührung und der Netzressourcen für den Nutzer und sein Kommunikationsendgerät MS dient.

Erfindungsgemäß entscheidet eine Ressourcen-Entscheidungsfunktion PDF, ob für den Versand von Daten mindestens eines Dienstes vom Dienste-Server AS an das Kommunikationsendgerät MS des Nutzers Netzressourcen erlaubt bzw. verweigert werden. Die von der Ressourcen-Entscheidungsfunktion PDF getroffene Entscheidung wird als Nachricht zu einem GGSN gesandt, der die Netzressourcen entsprechend der Entscheidung bereitstellt. Die Entscheidung bezieht sich auf die für das Versenden von Daten mindestens eines Dienstes zu vergebenden Netzressourcen wie zum Beispiel Übertragungsbandbreite, Qualität des Dienstes et cetera. Zusätzlich wird die Entscheidung in einer CAP Initialisierungsnachricht (CAP Initial DP GPRS) oder einer anderen Nachricht über den SGSN an die Dienst-Kontroll-Funktion (SCF) weitergeleitet. In einigen Fällen könnte es passieren, dass bei einer Anfrage vom Dienste-Server AS der Serving-GPRS-Support-Node SGSN bzw. der Gateway-GPRS-Support-Node GGSN nicht so viele Netzressourcen wie von der Ressourcen-Entscheidungsfunktion PDF erlaubt wurden, bereitgestellt werden können. In diesen Fällen wird der Nutzer des Dienstes mit der Qualität des Dienstes nicht zufrieden sein. Eine Lösung könnte unter Umständen sein, dass der Nutzer einen Preisnachlass für die übertragenen Daten mindestens eines Dienstes erhält. Andererseits könnte es passieren, dass der Serving-GPRS-Support-Node SGSN bzw. der Gateway-GPRS-Support-Node GGSN mehr Netzressourcen bereitstellen könnte, als der Ressourcen-Entscheidungsfunktion PDF erlaubt. Dann könnte zum Beispiel der Nutzer abgefragt werden, ob er eine bessere Qualität für den Dienst haben möchte. Dabei könnte sich auch die Vergebührung ändern.

Figur 2 zeigt eine vereinfachte Darstellung eines Kommunikationsnetzes gemäß Figur 1. Erfindungsgemäß wird die von der Ressourcen-Entscheidungsfunktion PDF getroffene Entscheidung bezüglich der Erlaubnis bzw. Verweigerung der Bereitstellung von Netzressourcen in mindestens einem Netzelement SGSN/GGSN für den Versand von Daten mindestens eines Dienstes vom Dienste-Server AS an das Kommunikationsendgerät MS direkt vom Gateway-GPRS-Support-Node GGSN an die Dienst-Kontroll-Funktion SCF weitergeleitet. Die Entscheidung wird dabei in einer Nachricht, insbesondere in einer CAP-Nachricht, an die Dienst-Kontroll-Funktion SCF weitergeleitet.

Figur 3 zeigt eine vereinfachte Vorrichtung zum Durchführen des erfindungsgemäßen Verfahrens. Die Vorrichtung besitzt eine Sendeeinheit S und eine Empfangseinheit E zur mobilen Kommunikation mit einem Kommunikationsnetz, insbesondere einem zellularen Mobilfunknetz. Eine Verarbeitungseinheit V wird verwendet, um eine Entscheidung für die Bereitstellung von Netzressourcen bzw. der Qualität des Dienstes in mindestens einem Netzelement (SGSN/GGSN) des Kommunikationsnetzes zu treffen. Die von der Verarbeitungseinheit V getroffene Entscheidung wird in einer Nachricht von der Sendeeinheit S an eine erste Netzeinheit GGSN und an eine weitere Netzeinheit SCF gesendet. Die erste Netzeinheit GGSN, welche die Entscheidung der Vorrichtung, insbesondere der Ressourcen-Entscheidungsfunktion PDF erhält, stellt die erlaubten Netzressourcen in mindestens einem Netzelement (SGSN/GGSN) für das Versenden von Daten mindestens eines Dienstes von einem Dienste-Server AS zu einem Kommunikationsendgerät MS bereit.

## Patentansprüche

1. Verfahren zum Bereitstellen von Netzressourcen für den Versand von Daten mindestens eines Dienstes von einem Dienste-Server (AS) an ein Kommunikationsendgerät (MS) über ein Kommunikationsnetz,
**dadurch gekennzeichnet,**
**dass** von einer Ressourcen-Entscheidungsfunktion (PDF) eine Entscheidung, betreffend die Bereitstellung von Netzressourcen in mindestens einem Netzelement (SGSN/GGSN), für den Versand von Daten mindestens eines Dienstes vom Dienste-Server (AS) an das Kommunikationsendgerät (MS) getroffen wird,
**dass** die getroffene Entscheidung als Nachricht an eine erste Netzeinheit (GGSN) und an eine weitere Netzeinheit (SCF) gesendet wird und
**dass** die erste Netzeinheit (GGSN) bei einer positiv getroffenen Entscheidung Netzressourcen für den Versand der Daten mindestens eines Dienstes an das Kommunikationsendgerät bereitstellt.

2. Verfahren nach Anspruch 1,
**dadurch gekennzeichnet,**
**dass** die Ressourcen-Entscheidungsfunktion (PDF) eine Einheit des IP-Multimedia-Untersystems (IMS) ist.

3. Verfahren nach einem der vorhergehenden Ansprüche,
**dadurch gekennzeichnet,**
**dass** als weitere Netzeinheit eine Dienst-Kontroll-Funktion (SCF) verwendet wird.

4. Verfahren nach einem der vorhergehenden Ansprüche,
**dadurch gekennzeichnet,**
**dass** als erste Netzeinheit (GGSN) ein Gateway-GPRS-Support-Node verwendet wird.

5. Verfahren nach einem der vorhergehenden Ansprüche,
**dadurch gekennzeichnet,**
**dass** die von der Ressourcen-Entscheidungsfunktion (PDF) getroffene Entscheidung über einen Serving-GPRS-Support-Node in einer CAP-Initialisierungsnachricht an die weitere Netzeinheit (SCF) gesendet wird.

6. Verfahren nach einem der vorhergehenden Ansprüche,
**dadurch gekennzeichnet,**
**dass** die von der Ressourcen-Entscheidungsfunktion (PDF) getroffene Entscheidung von der ersten Netzeinheit (GGSN) an die weitere Netzeinheit (SCF) direkt weitergeleitet wird.

7. Verfahren nach einem der vorhergehenden Ansprüche,
**dadurch gekennzeichnet,**
**dass** eine Ressourcen-Entscheidungsfunktion (PDF), eine Entscheidung betreffend die Erlaubnis oder die Verweigerung zur Bereitstellung von Netzressourcen trifft.

8. Verfahren nach einem der vorhergehenden Ansprüche,
**dadurch gekennzeichnet,**
**dass** als positive Entscheidung die Erlaubnis zur Bereitstellung von Netzressourcen angesehen wird.

9. Verfahren nach einem der vorhergehenden Ansprüche,
**dadurch gekennzeichnet,**
**dass** die Entscheidung in einer Nachricht einen Dienst-Qualitätsparameter enthält.

10. Verfahren nach einem der vorhergehenden Ansprüche,
**dadurch gekennzeichnet,**
**dass** der Dienst-Qualitätsparameter zur Vergebührung der zu versendenden Daten mindestens eines Dienstes verwendet wird.

11. Verfahren nach einem der vorhergehenden Ansprüche,
**dadurch gekennzeichnet,**
**dass** die Vergebührung abhängig von den zugewiesenen Netzressourcen für den Versand von Daten mindestens eines Dienstes ist.

12. Verfahren nach einem der vorhergehenden Ansprüche,
**dadurch gekennzeichnet,**
**dass** als Netzressource die Übertragungsbandbreite gilt.

13. Verfahren nach einem der vorhergehenden Ansprüche,
**dadurch gekennzeichnet,**
**dass** mindestens ein Dienst ein CAMEL-Dienst ist.

14. Verfahren nach einem der vorhergehenden Ansprüche,
**dadurch gekennzeichnet,**
**dass** als Kommunikationsnetz ein zellulares Mobilfunknetz verwendet wird.

15. Vorrichtung zum Bereitstellen von Netzressourcen für den Versand von Daten mindestens eines Dienstes von einem Dienste-Server (AS) an ein Kommunikationsendgerät (MS) über ein Kommunikationsnetz,
- mit einer Sendeeinheit (S) und einer Empfangseinheit (E) der Ressourcen-Entscheidungsfunktion (PDF) zur mobilen Kommunikation mit einem Kommunikationsnetz,
- mit einer Verarbeitungseinheit (V) in der Ressourcen-Entscheidungsfunktion (PDF) zum Treffen einer Entscheidung, betreffend die Bereitstellung von Netzressourcen in mindestens einem Netzelement (SGSN/GGSN), für den Versand von Daten mindestens eines Dienstes vom Dienste-Server (AS) an das Kommunikationsendgerät (MS),
- mit einer Sendeeinheit (S) zum Versenden der getroffenen Entscheidung als Nachricht an eine erste Netzeinheit (GGSN) und an eine weitere Netzeinheit (SCF),
- mit einer ersten Netzeinheit (GGSN) zur Bereitstellung von Netzressourcen bei einer positiv getroffenen Entscheidung in mindestens einem Netzelement (SGSN/GGSN)für den Versand der Daten mindestens eines Dienstes an das Kommunikationsendgerät.

16. Vorrichtung nach Anspruch 15,
**dadurch gekennzeichnet,**
**dass** als Kommunikationsnetz ein zellulares Mobilfunknetz vorgesehen ist.

17. Vorrichtung nach Anspruch 15 und 16,
**dadurch gekennzeichnet,**
**dass** die Ressourcen-Entscheidungsfunktion (PDF) als Einheit des IP-Multimedia-Untersystems (IMS) vorgesehen ist.

18. Vorrichtung nach Anspruch 15 bis 17,
**dadurch gekennzeichnet,**
**dass** als erste Netzeinheit (GGSN) ein Gateway-GPRS-Support-Node vorgesehen ist.

19. Vorrichtung nach Anspruch 15 bis 18,
**dadurch gekennzeichnet,**
**dass** als weitere Netzeinheit (SCF) eine Dienst-Kontroll-Funktion (gsmSCF) vorgesehen ist.

20. Vorrichtung nach Anspruch 15 bis 19,
**dadurch gekennzeichnet,**
**dass** die Ressourcen-Entscheidungsfunktion (PDF) zum Senden der getroffenen Entscheidung in einer CAP-Initialisierungsnachricht über einen Serving-GPRS-Support-Node an die weitere Netzeinheit (SCF) vorgesehen ist.

21. Vorrichtung nach Anspruch 15 bis 20,
**dadurch gekennzeichnet,**
**dass** die erste Netzeinheit (GGSN) zum Senden der von der Ressourcen-Entscheidungsfunktion (PDF) erhaltenen getroffenen Entscheidung in einer Nachricht an die weitere Netzeinheit (SCF) vorgesehen ist.
